# EUROPEAN PATENT SPECIFICATION

(11) **EP 1 469 234 B1**
(45) Date of publication and mention of the grant of the patent: **12.09.2007**
(21) Application number: 04101503.3
(22) Date of filing: 13.04.2004
(51) Int. Cl.: F16H 57/02, B60K 17/02

(54) **Method for forming a gearbox casing for a plurality of engines for motor vehicles, and forming mould for producing the casing**
Methode zur formenden Herstellung eines Getriebegehäuses für eine Vielzahl von Motoren und Gussform zur Herstellung des Gehäuses
Procédé pour moulage d'un carter de boîte de vitesse pour differents moteurs à combustion interne et moule pour fabriquer le carter

(30) Priority: 14.04.2003 IT TO20030290
(43) Date of publication of application: 20.10.2004
(73) Proprietor: FIAT AUTO S.p.A., 10135 Torino (IT)
(72) Inventor: Pastorello, Valter, 10040 Cumiana (IT)
(74) Representative: Jorio, Paolo

(56) References cited:
- US-A- 5 473 808
- US-A- 5 524 508
- US-A- 5 743 156

## Description

The present invention relates to a method for forming a gearbox casing for a plurality of engines for motor vehicles.

As is known, gearbox casings (also commonly known as gearbox "covers" or "housings") are made by pressure die-casting in a corresponding forming mould, which is entirely designed in accordance with the dimensions and shape of the casing to be produced.

These dimensions and shape depend both on the gearing of the gearbox that is to be accommodated in the casing, and on the characteristics of the motor vehicle on which the gearbox is to be fitted. In particular, the casing depends both on the type of engine and on the arrangement and orientation of the engine to which it is to be connected, and it is therefore necessary to fully design and produce a separate dedicated forming mould for each application and for each engine design.

However, this entails relatively long periods of time and consequently high costs for the design and production of the whole specific forming mould, to the detriment of the versatility that is normally required in production plants.

In addition to the fact that high costs are incurred for the preparation of the specific forming mould, in the case of motor vehicles for which the daily production volume is relatively low, for example 15 vehicles per day, the costs incurred can generally be recouped only in the long term.

US 5473808 discloses an engine transmission bellhousing having an attaching flange portion, in which a plurality of bolt holes is formed to fit a plurality of different engines.

The object of the present invention is to provide a method for forming a gearbox casing for a plurality of engines for motor vehicles, which enables the aforesaid problems to be overcome in a simple and economical way.

According to claim 1 of the present invention, a method is provided for forming a gearbox casing for a plurality of engines for motor vehicles; the casing comprising a housing portion for accommodating the said gearbox, and an attachment portion for connecting the said housing portion to at least one of the said engines; the method being characterized in that it comprises the steps of:
- forming the said housing portion, which is common to all the said engines;
- identifying the characteristics of each of the said engines;
- forming the said attachment portion according to the identified characteristics of the engine to which the casing is to be connected.

The present invention also relates to a forming mould for producing a gearbox casing for a plurality of engines for motor vehicles, as claimed in independent claim 3.

According to the present invention, a forming mould is made for producing a gearbox casing for a plurality of engines for motor vehicles; the said forming mould comprising a die and a forming punch, which move with respect to each other and form at least partially between them a space for forming the said casing, and being characterized in that at least one of the said die and the said forming punch comprises a main body and an insert that is interchangeable and can be selected from a plurality of inserts that differ from each other in their geometry and dimensions according to the identified characteristics of the said engines.

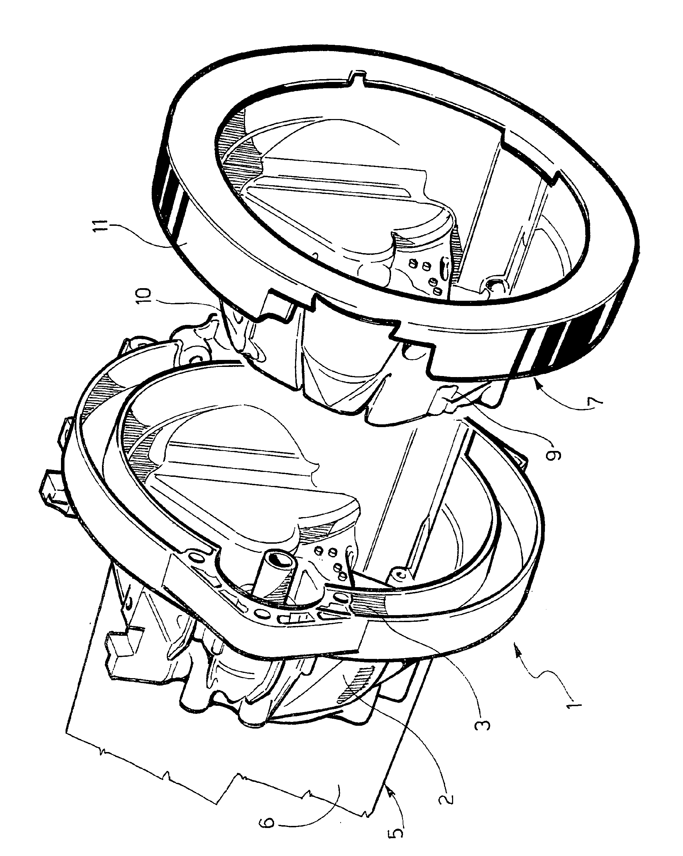

The invention will now be described with reference to the attached figure, which shows in a schematic and partial perspective view a non-restrictive preferred embodiment of the method for forming a gearbox casing for a plurality of engines for motor vehicles according to the present invention.

In the attached figure, the number 1 indicates a casing for a gearbox (not illustrated) of a motor vehicle. The casing 1, also called the "cover" or "housing" of the gearbox, can be fixed to the crankcase of a corresponding motor (not illustrated) in a known way, which is not described in detail, and forms a body made in one piece by die-casting, comprising a portion 2 housing the gearing of the gearbox and a portion 3, which forms one end of the casing 1 and has a plurality of attachment elements such as holes, studs and reference pins, which enable the portion 2 to be coupled to the aforesaid crankcase.

The casing 1 is made by means of a forming mould 5, after the identification of the characteristics of a plurality of different engines on which the casing 1 could be mounted. The term "characteristics of the engines" denotes both the geometric and dimensional characteristics of each engine and the characteristics of the mounting and orientation of the said engine in the corresponding motor vehicle, making it possible to determine the shape, the geometry and the relative and absolute positions of the attachment devices in the crankcase to which the casing 1 is to be connected.

The mould 5 is such that it can form the portion 2, whose geometry and dimensions are common to all the aforesaid engines taken into consideration, and can form the portion 3 according to the specific characteristics that have been identified for the engine to which the casing is to be connected.

In particular, the mould 5 comprises a die 6 (shown schematically and partially) and a forming punch 7, which can move with respect to each other under the action of actuator means, which are not illustrated, and form between them a forming space 9 corresponding to the negative of the casing 1. The punch 7 comprises a main body 10 and a terminal insert 11 (shown in heavier lines in the attached figure), which together with the die 6 determines the shape and/or the geometry of the portion 3, is supported together with the body 10 by a single support plate (not illustrated) and is joined to this plate in such a way that it is interchangeable. In particular, the insert 11 can be selected from a plurality of inserts that differ from each other in respect of geometry and dimensions, according to the characteristics identified for each of the aforesaid engines.

On the other hand, the shape and geometry of the portion 2 are determined by the combination of the die 6 and the body 10 and consequently by an unchanging portion of the mould 5.

It is clear from the above that the casing 1 has a high degree of versatility in terms of the design of casings for new engines or for new applications, and can therefore limit the time and cost requirements for the design, testing and preparation of the production equipment.

This is due to the fact that, for new engines or new applications, a portion of the casing 1 remains common to all engines, while it is necessary to design only the insert 11 for forming the portion 3.

For example, the time taken to design the insert 11 alone is approximately one tenth of the time taken to design a complete mould for a new casing.

Finally, it is clear from the above description that the method described with reference to the attached figures can be modified and varied in ways that do not depart from the scope of protection of the present invention.

The mould 5, and, in particular, the interchangeable insert 11, could be different from those illustrated by way of example, and/or the insert 11 could be carried at least partially by the die 6.

## Claims

1. Method for forming a gearbox casing (1) for a plurality of engines for motor vehicles; the casing comprising a housing portion (2) for accommodating the said gearbox, and an attachment portion (3) for connecting the said housing portion (2) to at least one of the said engines; the method being **characterized in that** it comprises the steps of:
- forming the said housing portion (2), which is common to all the said engines;
- identifying the characteristics of each of the said engines;
- forming the said attachment portion (3) according to the identified characteristics of the engine to which the casing (1) is to be connected;
the forming of the said attachment portion (3) and the forming of the said housing portion (2) being carried out by means of the same forming mould (5) to obtain a body in one piece.

2. Method according to Claim 2, **characterized in that** the said housing portion (2) is formed by an unchanging portion (10, 6) of the said forming mould (5), while the said attachment portion (3) is formed at least partially by an interchangeable insert (11) of the said forming mould (5).

3. Forming mould (5) for producing a gearbox casing (1) for a plurality of engines for motor vehicles; the said forming mould comprising a die (6) and a forming punch (7), which move with respect to each other and form at least partially between them a space (9) for forming the said gearbox casing (1), and being **characterized in that** at least one of the said die (6) and the said forming punch (7) comprises a main body (10) and an insert (11) that is interchangeable and can be selected from a plurality of inserts that differ from each other in their geometry and dimensions according to the identified characteristics of the said engines.

## Patentansprüche

1. Verfahren zum Bilden eines Getriebegehäuses (1) für mehrere Motoren für Kraftfahrzeuge, wobei das Gehäuse einen Gehäuseabschnitt (2) zum Unterbringen des Getriebes aufweist, und einen Befestigungsabschnitt (3) zum Verbinden des Gehäuseabschnitts (2) mit mindestens einem der Motoren, wobei das Verfahren **dadurch gekennzeichnet ist, dass** es die folgenden Schritte aufweist:
- Bilden des Gehäuseabschnitts (2), der bei allen Motoren gleich ist,
- Identifizieren der Merkmale jedes der Motoren,
- Bilden des Befestigungsabschnitts (3) gemäß den identifizierten Merkmalen des Motors, an dem das Gehäuse (2) zu befestigen ist,
wobei das Formen des Befestigungsabschnitts (3) und das Formen des Gehäuseabschnitts (2) mit der gleichen Form (5) ausgeführt werden, um einen Körper aus einem Stück zu erzielen.

2. Verfahren nach Anspruch 2, **dadurch gekennzeichnet, dass** der Gehäuseabschnitt (2) aus einem unveränderlichen Abschnitt (10, 6) der Form (5) geformt wird, während der Befestigungsabschnitt (3) zumindest teilweise durch einen austauschbaren Einsatz (11) der Form (5) gebildet wird.

3. Form (5) zum Herstellen eines Getriebegehäuses (1) für mehrere Motoren für Kraftfahrzeuge, wobei die Form, die ein Gesenk (6) und einen Stempel (7) aufweist, die sich zueinander bewegen und zumindest teilweise zwischen einander einen Raum (9) zum Formen des Getriebegehäuses (1) bilden, und **dadurch gekennzeichnet ist, dass** zumindest das Gesenk (6) oder der Stempel (7) einen Hauptkörper (10) und einen Einsatz (11) aufweisen, der austauschbar ist und aus mehreren Einsätzen ausgewählt werden kann, die sich voneinander in ihrer Geometrie und ihren Maßen gemäß den identifizierten Merkmalen des Motors unterscheiden.

## Revendications

1. Procédé de formation d'un carter de boîte de vitesses (1) pour une pluralité de moteurs de véhicules à moteur ; le carter comprenant une partie de logement (2) pour recevoir ladite boîte de vitesses, et une partie de fixation (3) pour connecter ladite partie de logement (2) à au moins l'un desdits moteurs ; le procédé étant **caractérisé en ce qu'**il comprend les étapes consistant à :
- former ladite partie de logement (2) qui est commune à tous lesdits moteurs ;
- identifier les caractéristiques de chacun desdits moteurs ;
- former ladite partie de fixation (3) selon les caractéristiques identifiées du moteur auquel le carter (1) doit être connecté ;
le formage de ladite partie de fixation (3) et le formage de ladite partie de logement (2) étant réalisés au moyen du même moule de formage (5) afin d'obtenir un corps d'une seule pièce.

2. Procédé selon la revendication 1, **caractérisé en ce que** ladite partie de logement (2) est formée par une partie immuable (10, 6) dudit moule de formage (5), tandis que ladite partie de fixation (3) est formée au moins partiellement par un insert interchangeable (11) dudit moule de formage (5).

3. Moule de formage (5) pour produire un carter de boîte de vitesses (1) pour une pluralité de moteurs de véhicules à moteur ; ledit moule de formage comprenant une matrice (6) et un poinçon de formage (7), qui se déplacent l'un par rapport à l'autre et forment au moins partiellement entre eux un espace (9) pour former ledit carter de boîte de vitesses (1), et étant **caractérisé en ce qu'**au moins l'un de ladite matrice (6) et dudit poinçon de formage (7) comprend un corps principal (10) et un insert (11) qui est interchangeable et peut être choisi à partir d'une pluralité d'inserts qui différent les uns des autres dans leur géométrie et leurs dimensions selon les caractéristiques identifiées desdits moteurs.
